(19) **Europäisches Patentamt** / **European Patent Office** / **Office européen des brevets**

(11) **EP 4 156 525 A1**

(12) **EUROPEAN PATENT APPLICATION**
published in accordance with Art. 153(4) EPC

(43) Date of publication:
29.03.2023 Bulletin 2023/13

(21) Application number: 21829027.8

(22) Date of filing: 28.05.2021

(51) International Patent Classification (IPC):
$H04B\ 1/02^{(2006.01)}$ $\qquad$ $H04R\ 1/00^{(2006.01)}$

(52) Cooperative Patent Classification (CPC):
H04B 1/02; H04B 1/04; H04B 1/401; H04B 1/46;
H04R 1/00; H04W 52/02; H04W 88/14; Y02D 30/70

(86) International application number:
PCT/CN2021/096820

(87) International publication number:
WO 2021/258997 (30.12.2021 Gazette 2021/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.06.2020 CN 202010575853

(71) Applicant: Huawei Technologies Co., Ltd.
Longgang District,
Shenzhen,
Guangdong 518129 (CN)

(72) Inventors:
• ZHANG, Chunqing
Shenzhen, Guangdong 518129 (CN)
• HUANG, Jingjing
Shenzhen, Guangdong 518129 (CN)
• LIU, Peng
Shenzhen, Guangdong 518129 (CN)

(74) Representative: Epping - Hermann - Fischer
Patentanwaltsgesellschaft mbH
Schloßschmidstraße 5
80639 München (DE)

(54) **WIRELESS COMMUNICATION DEVICE AND WIRELESS COMMUNICATION METHOD AND SYSTEM**

(57) This application discloses a wireless communication device, method, and system, and belongs to the field of communication technologies. The wireless communication device provided in embodiments of this application includes a backscatter device, so that the wireless communication device may amplify, by using the backscatter device, a signal received through an antenna, and reflect an amplified signal outwards through the antenna. Therefore, in a wireless communication system using the wireless communication device provided in embodiments of this application, when the wireless communication device does not need to perform communication, the wireless communication device may enable a backscatter mode, to provide a radio signal relay and amplification service. This expands radio signal coverage and assists in communication between other wireless communication devices in the wireless communication system. In addition, when the wireless communication device is in the backscatter mode, the wireless communication device does not parse and process a received signal, but directly amplifies the signal and then reflects an amplified signal outwards. Therefore, a signal transmission delay is small.

FIG. 1

## Description

This application claims priority to Chinese Patent Application No. 202010575853.3, filed on June 22, 2020 and entitled "WIRELESS COMMUNICATION DEVICE, METHOD, AND SYSTEM", which is incorporated herein by reference in its entirety.

## TECHNICAL FIELD

This application relates to the field of communication technologies, and in particular, to a wireless communication device, method, and system.

## BACKGROUND

With the development of communication technologies, wireless communication technologies are applied more widely. For example, in recent years, Bluetooth-based wireless headset products have achieved great success. There are a plurality of types of Bluetooth headsets, for example, a single-earbud Bluetooth headset and a dual-earbud Bluetooth headset. The dual-earbud Bluetooth headset may be further classified into a split-type Bluetooth headset and a wired Bluetooth headset. There is no connection wire between two earbuds of a split-type Bluetooth headset, and two earbuds of a wired Bluetooth headset are connected through a connection wire. Two earbuds of a split-type Bluetooth headset are independent of each other in a physical form. Therefore, a solution to data transmission between a mobile phone and a split-type Bluetooth headset is complex.

In a related technology, there is a time division transmission solution for data transmission between a split-type Bluetooth headset and a mobile phone. During data transmission, the mobile phone establishes communication links to the two earbuds, sends corresponding audio data to one earbud in a first period, and sends corresponding audio data to the other earbud in a second period. The first period and the second period alternate with each other.

In a process of implementing this application, the applicant finds that the related technology has at least the following disadvantage:

When an earbud is far away from the mobile phone or is blocked, a signal that carries audio data and that is sent by the mobile phone is severely attenuated in a transmission process. Consequently, the earbud may fail to demodulate the audio data.

## SUMMARY

Embodiments of this application provide a wireless communication device, method, and system, to resolve a technical problem in a related technology. The wireless communication device, method, and system are as follows.

According to a first aspect, a wireless communication device is provided. The wireless communication device includes a processor, a transceiver, a backscatter device, and an antenna. The processor is configured to: in a transceiving period, control the transceiver to work and the backscatter device to stop working, and in a non-transceiving period, control the transceiver to stop working and the backscatter device to work. The transceiver is configured to send and receive, in a working state, a signal through the antenna. The backscatter device is configured to: amplify, in a working state, the signal received through the antenna; and reflect an amplified signal outwards through the antenna.

The wireless communication device provided in an embodiment of this application may be, but not limited to, a communication server, a router, a switch, a bridge, a computer, a mobile phone, a watch, a headset, a television, a smart appliance, or the like.

The processor is a control center of the wireless communication device, and may control working states of the transceiver and the backscatter device, parse and process a received signal, and the like.

The transceiver may include a receiver and a transmitter, and is configured to receive and send a signal through the antenna. The transceiver may be the same as a transceiver in a related technology, and the transceiver may also be referred to as a communication transceiver.

The backscatter device is configured to: amplify a signal received through the antenna, and reflect an amplified signal outwards through the antenna. A specific implementation form of the backscatter device is not limited in this application. In a possible implementation, the backscatter device may be implemented based on a tunnel diode. In another possible implementation, the backscatter device may alternatively be implemented by using a complementary metal oxide semiconductor (complementary metal oxide semiconductor, CMOS) circuit.

A transceiving period is a period in which the wireless communication device needs to normally participate in wireless communication. In such a period, the wireless communication device is a signal receiving node or a signal sending node. A non-transceiving period is a period in which the wireless communication device does not participate in wireless communication, or participates in wireless communication only as a relay node. This embodiment of this application imposes no limitation on determining of a transceiving period and a non-transceiving period of the wireless communication device. For example, when the wireless communication device is an earbud, a transceiving period and a non-transceiving period may be configured by a user terminal when the earbud is connected to the user terminal. Transceiving periods and non-transceiving periods of two earbuds correspond to each other, that is, when one earbud is in a transceiving period, the other earbud is in a non-transceiving period.

For ease of description, a mode in which the transceiver of the wireless communication device works and the backscatter device does not work may be referred to as a transceiving mode or a normal working mode of the wireless communication device. A mode in which the transceiver of the wireless communication device does not work and the backscatter device of the wireless communication device works may be referred to as a backscatter mode of the wireless communication device. In a transceiving period, the wireless communication device works in the transceiving mode (or the normal working mode), and in a non-transceiving period, the wireless communication device may work in the backscatter mode.

The wireless communication device provided in this embodiment of this application may additionally provide a radio signal relay and amplification service besides completing normal wireless communication.

The wireless communication device includes the backscatter device. The wireless communication device may amplify a signal received through the antenna by using the backscatter device, and reflect an amplified signal outwards through the antenna. Therefore, in a wireless communication system using the wireless communication device provided in this embodiment of this application, when the wireless communication device does not need to perform communication (that is, in a non-transceiving period), the wireless communication device may enable the backscatter mode, to provide a radio signal relay and amplification service. In addition, when the wireless communication device is in the backscatter mode, the wireless communication device does not parse and process a received signal, but directly amplifies the signal and then reflects an amplified signal outwards. Therefore, a signal transmission delay is small. In addition, because the backscatter device directly amplifies and reflects a radio frequency signal, the wireless communication device provided in this embodiment of this application may be used in all wireless communication systems, and may relay a radio signal of any protocol.

In addition, an incident signal of a wireless communication device serving as a relay node is generally weak, and energy needed for amplifying a weak signal many multiples is also low. For example, if strength of an incident signal of the wireless communication device is -50 dBm, even if the signal is amplified by 40 dB, that is, 10,000 multiples, power consumption needed is only 200-300 uW. Moreover, the power consumption of the backscatter device is lower when there is no incident signal. In addition, to prevent the wireless communication device from amplifying another unnecessary signal, the backscatter device may also be disabled when it is not needed, to save energy to a greater extent.

In a possible implementation, the processor is configured to: control the transceiver to be connected to the antenna and the backscatter device to be disconnected from the antenna in a transceiving period, and control the backscatter device to be connected to the antenna and the transceiver to be disconnected from the antenna in a non-transceiving period.

The antenna is not simultaneously connected to the backscatter device and the transceiver.

In the solution shown in this embodiment of this application, the antenna is not simultaneously connected to the transceiver and the backscatter device, and the processor controls working states of the transceiver and the backscatter device by controlling connection to the antenna.

On a premise that both the transceiver and the backscatter device are enabled, if the transceiver is connected to the antenna, the transceiver is in a working state; or if the transceiver is disconnected from the antenna, the transceiver is in a non-working state. Correspondingly, if the backscatter device is connected to the antenna, the backscatter device is in a working state; or if the backscatter device is disconnected from the antenna, the backscatter device is in a non-working state.

In a transceiving period, the wireless communication device is in the transceiving mode, the transceiver is connected to the antenna, and the backscatter device is disconnected from the antenna. In a non-transceiving period, the wireless communication device may be in the backscatter mode, the backscatter device is connected to the antenna, and the transceiver is disconnected from the antenna.

In a possible implementation, the antenna is connected to the transceiver and the backscatter device. The processor is configured to: control the transceiver to be enabled and the backscatter device to be disabled in a transceiving period; and control the backscatter device to be enabled and the transceiver to be disabled in a non-transceiving period.

In the solution shown in this embodiment of this application, the antenna may be connected to both the transceiver and the backscatter device, and the processor may control working states of the transceiver and the backscatter device by enabling or disabling the transceiver and the backscatter device.

In a transceiving period, the wireless communication device is in the transceiving mode, the transceiver is enabled, and the backscatter device is disabled. In a non-transceiving period, the wireless communication device may be in the backscatter mode, the backscatter device is enabled, and the transceiver is disabled.

In a possible implementation, the processor is configured to: in response to a mode switching message received in a transceiving period, control the transceiver to work and the backscatter device to stop working in a transceiving period, and control the transceiver to stop working and the backscatter device to work in a non-transceiving period.

In the solution shown in this embodiment of this application, a state in which the wireless communication device switches to the transceiving mode in a transceiving period, and switches to the backscatter mode in a non-transceiving period may be referred to as a mode switching state. In the mode switching state, the wireless communication device automatically switches between the transceiving mode and the backscatter mode based on a period in which the wireless communication device is.

The mode switching state may be a default state, or may be entered under control of another wireless communication device. For example, the wireless communication system includes a first wireless communication device, a second wireless communication device, and a third wireless communication device. The second wireless communication device is the wireless communication device provided in this embodiment of this application. In this case, when the first wireless communication device finds, through detection, that quality of communication with the third wireless communication device is low or fails to find the third wireless communication device through detection, or the first wireless communication device has a low battery level, the first wireless communication device may send a mode switching message to the second wireless communication device, so that the second wireless communication device enters the mode switching state.

In a possible implementation, the processor is further configured to control the backscatter device to stop working in both a transceiving period and a non-transceiving period in response to a mode switching disable message received in a transceiving period.

In the solution shown in this embodiment of this application, when the backscatter amplification function of the wireless communication device is not needed, the backscatter device may be controlled to stop working in both a transceiving period and a non-transceiving period. In this way, the power consumption of the wireless communication device can be reduced.

For example, the wireless communication system includes a first wireless communication device, a second wireless communication device, and a third wireless communication device. The second wireless communication device is the wireless communication device provided in this embodiment of this application. When the first wireless communication device finds, through detection, that quality of direct communication with the third wireless communication device is higher than a second target quality threshold, even if the second wireless communication device does not switch to the backscatter mode, the first wireless communication device and the third wireless communication device can complete communication well. When the second wireless communication device enters a transceiving period, the first wireless communication device (or the third wireless communication device) sends a mode switching disable message to the second wireless communication device. The second wireless communication device receives the mode switching disable message and controls the backscatter device to stop working in both a transceiving period and a non-transceiving period. This reduces power consumption of the second wireless communication device.

In a possible implementation, the processor is further configured to control, based on a backscatter gain adjustment message received in a transceiving period, a multiple for reflecting and amplifying a received signal by the backscatter device.

In the solution shown in this embodiment of this application, a multiple for reflecting and amplifying a received signal may be further adjusted when the wireless communication device is in the backscatter mode. In this way, a relay and amplification function of the wireless communication device is better utilized.

For example, the wireless communication system includes a first wireless communication device, a second wireless communication device, and a third wireless communication device. The second wireless communication device is the wireless communication device provided in this embodiment of this application. In this case, the first wireless communication device may generate the backscatter gain adjustment message based on the quality of communication with the third wireless communication device. When the second wireless communication device enters a transceiving period, a backscatter gain adjustment message is sent to the second wireless communication device, and the second wireless communication device adjusts, based on the backscatter gain adjustment message, a multiple for reflecting and amplifying a received signal by the backscatter device.

In a possible implementation, the processor is further configured to control a working frequency of the wireless communication device based on a frequency indication message received in a transceiving period.

In the solution shown in this embodiment of this application, the wireless communication device needs to work at a working frequency in a working process. Working frequencies of wireless communication devices participating in wireless communication at a same moment need to be consistent, and working frequencies of the wireless communication devices need to be changed in different working periods. Therefore, the processor further needs to control a working frequency of the wireless communication device.

For example, the wireless communication system includes a first wireless communication device, a second wireless communication device, and a third wireless communication device. The second wireless communication device is the wireless communication device provided in this embodiment of this application. The first wireless communication device is a primary control device in the communication system. In this case, the first wireless communication device may determine a working frequency of each wireless communication device, and send a frequency indication message to the second wireless communication device, so that the second wireless communication device may work at a target frequency based on the frequency indication message.

In a possible implementation, the processor is further configured to control duration of a non-transceiving period and duration of a transceiving period based on a duration indication message received in a transceiving period.

In the solution shown in this embodiment of this application, duration of a transceiving period and duration of a non-transceiving period of the wireless communication device are controlled, to prevent failure to switch to a normal mode and failure to normally receive a signal that are caused because the wireless communication device is in the backscatter mode all the time (duration of a non-transceiving period is excessively long).

In a possible implementation, the wireless communication device further includes a memory.

In the solution shown in this embodiment of this application, the wireless communication device may further include a memory, and the memory may be configured to store data that needs to be stored, such as signaling or a signal.

According to a second aspect, a wireless communication method is provided. The method is applied to a wireless communication system, and the system includes a first wireless communication device, a second wireless communication device, and a third wireless communication device. The second wireless communication device includes a processor, a transceiver, a backscatter device, and an antenna. The method includes:

The first wireless communication device sends a signal corresponding to the third wireless communication device.

When the second wireless communication device enters a non-transceiving period, the backscatter device amplifies a signal received through the antenna, and reflects an amplified signal outwards through the antenna.

The third wireless communication device receives the signal reflected outwards by the second wireless communication device.

The second wireless communication device may be the wireless communication device provided in the first aspect.

In the solution shown in this embodiment of this application, the first wireless communication device sends a signal corresponding to the third wireless communication device, and the second wireless communication device is in a non-transceiving period in this case. The second wireless communication device may switch to the backscatter mode, amplify a signal received through the antenna by using the backscatter device, and reflect an amplified signal outwards through the antenna, to assist in communication between the first wireless communication device and the third wireless communication device. In this case, the third wireless communication device may receive the signal reflected outwards by the second wireless communication device.

The second wireless communication device is switched to the backscatter mode in a non-transceiving period, so that the second wireless communication device can provide a relay and amplification service for another wireless communication device in the wireless communication system. This improves communication quality.

It should be noted that the third wireless communication device may alternatively be the wireless communication device provided in this embodiment of this application. In this way, the second wireless communication device and the third wireless communication device may enable mutual assistance communication, that is, the second wireless communication device provides a relay and amplification service for communication between the first wireless communication device and the third wireless communication device, and the third wireless communication device provides a relay and amplification service for communication between the first wireless communication device and the second wireless communication device.

Alternatively, the first wireless communication device may be the wireless communication device provided in this embodiment of this application. In this way, the second wireless communication device and the first wireless communication device may enable mutual assistance communication, that is, the second wireless communication device provides a relay and amplification service for communication between the first wireless communication device and the third wireless communication device, and the first wireless communication device provides a relay and amplification service for communication between the third wireless communication device and the second wireless communication device.

In a possible implementation, after the third wireless communication device receives the signal reflected outwards by the second wireless communication device, the method further includes:

The third wireless communication device sends a reception acknowledgement signal corresponding to the first wireless communication device.

When the second wireless communication device enters a non-transceiving period, the backscatter device amplifies the reception acknowledgement signal received through the antenna, and reflects an amplified reception acknowledgement signal outwards through the antenna.

The first wireless communication device receives the reception acknowledgement signal reflected outwards by the second wireless communication device.

A reception acknowledgement signal may also be referred to as an acknowledge character (acknowledge character, ACK) signal.

In the solution shown in this embodiment of this application, after successfully receiving a signal sent by the first wireless communication device, the third wireless communication device needs to reply to the first wireless communication device with an ACK signal. In this case, the second wireless communication device is still in a non-transceiving period. The second wireless communication device may maintain the backscatter mode, amplify an ACK signal received through the antenna by using the backscatter device, and reflect an amplified ACK signal outwards through the antenna, to assist in communication between the first wireless communication device and the third wireless communication device. In this case, the first wireless communication device may receive the ACK signal reflected outwards by the second wireless communication device.

In a possible implementation, when the second wireless communication device enters a non-transceiving period, before the backscatter device amplifies a signal received through the antenna, and reflects an amplified signal outwards through the antenna, the method further includes:

When a target condition is met, the first wireless communication device sends a mode switching message corresponding to the second wireless communication device.

When the second wireless communication device enters a transceiving period, the transceiver receives the mode switching message through the antenna. In response to the mode switching message, the processor controls the transceiver to work and the backscatter device to stop working in a transceiving period, and controls the transceiver to stop working and the backscatter device to work in a non-transceiving period.

In the solution shown in this embodiment of this application, a state in which the wireless communication device switches to the transceiving mode in a transceiving period, and switches to the backscatter mode in a non-transceiving period may be referred to as a mode switching state. In the mode switching state, the wireless communication device automatically switches between the transceiving mode and the backscatter mode based on a period in which the wireless communication device is.

The mode switching state may be a default state, or may be entered under control of another wireless communication device. For example, the wireless communication system includes a first wireless communication device, a second wireless communication device, and a third wireless communication device. The second wireless communication device is the wireless communication device provided in this embodiment of this application. When the first wireless communication device or the third wireless communication device meets a target condition, a mode switching message may be sent to the second wireless communication device, so that the second wireless communication device enters the mode switching state.

In a possible implementation, the target condition includes one or more of the following: A battery level of the first wireless communication device is lower than a target battery level threshold, the first wireless communication device finds, through detection, that quality of communication with the third wireless communication device is lower than a target quality threshold, and the first wireless communication device fails to find the third wireless communication device through detection.

In the solution shown in this embodiment of this application, when the target condition is that a battery level of the first wireless communication device is lower than a target battery level threshold, the second wireless communication device is controlled to enable the backscatter mode in a non-transceiving period, so that the second wireless communication device provides a relay and amplification service. This can improve energy of a radio signal. Accordingly, the first wireless communication device can reduce signal transmit power, reduce power consumption, and prolong usage time.

When the target condition is that the first wireless communication device finds, through detection, that quality of communication with the third wireless communication device is lower than a target quality threshold, the second wireless communication device is controlled to enable the backscatter mode in a non-transceiving period, so that the second wireless communication device provides a relay and amplification service. This can improve radio signal quality, and improves quality of communication between the first wireless communication device and the third wireless communication device.

When the target condition is that the first wireless communication device fails to find the third wireless communication device through detection, the second wireless communication device is controlled to enable the backscatter mode in a non-transceiving period, so that the second wireless communication device provides a relay and amplification service. This can expand radio signal coverage. Accordingly, the third wireless communication device that fails to be found before can be found through detection.

In a possible implementation, when the target condition is that the battery level of the first wireless communication device is lower than the target battery level threshold, after the step of controlling, by the processor in response to the mode switching message, the transceiver to work and the backscatter device to stop working in a transceiving period, and controlling the transceiver to stop working and the backscatter device to work in a non-transceiving period, the method further includes: When the second wireless communication device enters a transceiving period, the transceiver sends a switching success message corresponding to the first wireless communication device through the antenna. The first wireless communication device receives the switching success message, to reduce signal transmit power.

In the solution shown in this embodiment of this application, after entering the mode switching state, the second wireless communication device may send a switching success message to the first wireless communication device in a transceiving period, to notify the first wireless communication device that the signal transmit power can be reduced. This reduces power consumption of the first wireless communication device and prolongs usage time of the first wireless communication.

In a possible implementation, the method further includes: The first wireless communication device sends a frequency indication message corresponding to the second wireless communication device. When the second wireless communication device enters a transceiving period, the transceiver receives the frequency indication message through the antenna, and the processor controls a working frequency of the second wireless communication device based on the frequency indication message.

In the solution shown in this embodiment of this application, the wireless communication device needs to work at a working frequency in an operation process. Working frequencies of wireless communication devices participating in wireless communication at a same moment need to be consistent, and working frequencies of the wireless communication devices need to be changed in different working periods. Therefore, the processor further needs to control a working frequency of the wireless communication device.

In the wireless communication system provided in this embodiment of this application, the first wireless communication device may be a primary control device. In this case, the first wireless communication device may determine a working frequency of each wireless communication device, and send a frequency indication message to the second wireless communication device, and the second wireless communication device may work at a target frequency based on the frequency indication message.

In a possible implementation, the method further includes: The first wireless communication device sends a backscatter gain adjustment message corresponding to the second wireless communication device. When the second wireless communication device enters a transceiving period, the transceiver receives the backscatter gain adjustment message through the antenna, and the processor controls, based on the backscatter gain adjustment message, a multiple for reflecting and amplifying a received signal by the backscatter device.

In the solution shown in this embodiment of this application, a multiple for reflecting and amplifying a received signal may be further adjusted when the second wireless communication device is in the backscatter mode.

In the wireless communication system provided in this embodiment of this application, the first wireless communication device may generate the backscatter gain adjustment message based on the quality of communication with the third wireless communication device. When the second wireless communication device enters a transceiving period, a backscatter gain adjustment message is sent to the second wireless communication device, and the second wireless communication device adjusts, based on the backscatter gain adjustment message, a multiple for reflecting and amplifying a received signal by the backscatter device.

In a possible implementation, before the first wireless communication device sends a backscatter gain adjustment message corresponding to the second wireless communication device, the method further includes: The first wireless communication device generates the backscatter gain adjustment message based on the quality of communication with the third wireless communication device.

In a possible implementation, the method further includes: The first wireless communication device sends a mode switching disable message corresponding to the second wireless communication device. When the second wireless communication device enters a transceiver period, the transceiver receives the mode switching disable message through the antenna. In response to the mode switching disable message, the processor controls the backscatter device to stop working in both a transceiving period and a non-transceiving period.

In the solution shown in this embodiment of this application, when the backscatter amplification function of the second wireless communication device is not needed, the backscatter device may be controlled to stop working in both a transceiving period and a non-transceiving period. In this way, the power consumption of the second wireless communication device can be reduced.

When the first wireless communication device finds, through detection, that quality of direct communication with the second wireless communication device is higher than a second target quality threshold, even if the second wireless communication device does not switch to the backscatter mode, the first wireless communication device and the third wireless communication device can complete communication well. When the second wireless communication device enters a transceiving period, the first wireless communication device (or the third wireless communication device) sends a mode switching disable message to the second wireless communication device. The second wireless communication device receives the mode switching disable message and controls the backscatter device to stop working in both a transceiving period and a non-transceiving period. This reduces the power consumption of the second wireless communication device.

In a possible implementation, that the first wireless communication device sends a mode switching disable message corresponding to the second wireless communication device includes: The first wireless communication device sends the mode switching message corresponding to the second wireless communication device when finding, through detection, that quality of direct communication with the third wireless communication device is higher than a second target quality threshold.

In a possible implementation, the method further includes: The first wireless communication device sends a duration indication message corresponding to the second wireless communication device. When the second wireless communication device enters a transceiving period, the transceiver receives the duration indication message through the antenna, and the processor controls duration of a non-transceiving period and duration of a transceiving period in response to the duration indication message.

In the solution shown in this embodiment of this application, duration of a transceiving period and duration of a non-transceiving period of the wireless communication device are controlled, to prevent failure to switch to a normal mode and failure to normally receive a signal that are caused because the wireless communication device is in the backscatter mode all the time (duration of a non-transceiving period is excessively long).

According to a third aspect, a wireless communication system is provided. The system includes a first wireless communication device, a second wireless communication device, and a third wireless communication device. The second wireless communication device is the wireless communication device according to the first aspect.

In a possible implementation, the first wireless communication device is configured to send a signal corresponding to the third wireless communication device.

The second wireless communication device is configured to: amplify a signal received through an antenna, and reflect an amplified signal outwards through the antenna.

The third wireless communication device is configured to receive the signal reflected outwards by the second wireless communication device.

In a possible implementation, the third wireless communication device is configured to send a reception acknowledgement signal corresponding to the first wireless communication device.

The second wireless communication device is further configured to amplify the reception acknowledgement signal received through the antenna, and reflect an amplified reception acknowledgement signal outwards through the antenna.

The first wireless communication device is further configured to receive the reception acknowledgement signal reflected outwards by the second wireless communication device.

In a possible implementation, the first wireless communication device is further configured to: when a target condition is met, send a mode switching message corresponding to the second wireless communication device.

The second wireless communication device is further configured to: in response to the mode switching message, control the transceiver to work and the backscatter device to stop working in a transceiving period, and control the transceiver to stop working and the backscatter device to work in a non-transceiving period.

In a possible implementation, the target condition includes one or more of the following: A battery level of the first wireless communication device is lower than a target battery level threshold, the first wireless communication device finds, through detection, that quality of communication with the third wireless communication device is lower than a target quality threshold, and the first wireless communication device fails to find the third wireless communication device through detection.

In a possible implementation, when the target condition is that a battery level of the first wireless communication device is lower than a target battery level threshold, the second wireless communication device is further configured to send a switching success message corresponding to the first wireless communication device.

The first wireless communication device is further configured to receive the switching success message, to reduce signal transmit power.

In a possible implementation, the first wireless communication device is further configured to send a frequency indication message corresponding to the second wireless communication device.

The second wireless communication device is further configured to control a working frequency based on the frequency indication message.

In a possible implementation, the first wireless communication device is further configured to send a backscatter gain adjustment message corresponding to the second wireless communication device.

The second wireless communication device is further configured to control, based on the backscatter gain adjustment message, a multiple for reflecting and amplifying a received signal.

In a possible implementation, the first wireless communication device is further configured to generate the backscatter gain adjustment message based on the quality of communication with the third wireless communication device.

In a possible implementation, the first wireless communication device is further configured to send a mode switching disable message corresponding to the second wireless communication device.

The second wireless communication device is further configured to control the backscatter device to stop working in both a transceiving period and a non-transceiving period in response to the mode switching disable message.

In a possible implementation, the first wireless communication device is further configured to send the mode switching message when finding, through detection, that quality of direct communication with the third wireless communication device is higher than a second target quality threshold.

In a possible implementation, the first wireless communication device is further configured to send a duration indication message corresponding to the second wireless communication device.

The second wireless communication device is further configured to control duration of a non-transceiving period and duration of a transceiving period based on the duration indication message.

Beneficial effects brought by the technical solutions provided in embodiments of this application are as follows.

Embodiments of this application provide the wireless communication device. The wireless communication device includes the backscatter device. The wireless communication device may amplify, by using the backscatter device, the signal received through the antenna and reflect the amplified signal outwards through the antenna. Therefore, in the wireless communication system using the wireless communication device provided in embodiments of this application, when the wireless communication device does not need to perform communication, the wireless communication device may provide a radio signal relay and amplification service, to assist in communication between other wireless communication devices in the wireless communication system.

When the wireless communication device is one earbud of a Bluetooth headset, during data transmission between a mobile phone and another earbud, the earbud may provide a radio signal relay and amplification service, assist in communication between a mobile phone and the other earbud, and amplify a received signal sent by the mobile phone by using a backscatter device, and reflect the amplified signal through the antenna. In this way, received signal quality of the other earbud can be enhanced, and a possibility of failure in demodulating audio data can be reduced.

**BRIEF DESCRIPTION OF DRAWINGS**

FIG. 1 is a schematic diagram of a wireless communication device according to an embodiment of this application;

FIG. 2 is a schematic diagram of a principle of amplification through negative resistance according to an embodiment of this application;

FIG. 3 is a schematic diagram of a change of a current of a tunnel diode with a voltage according to an embodiment of this application;

FIG. 4 is a schematic diagram of a wireless communication device according to an embodiment of this application;

FIG. 5 is a schematic diagram of a wireless communication device according to an embodiment of this application;

FIG. 6 is a schematic diagram of a backscatter device according to an embodiment of this application;

FIG. 7 is a schematic diagram of another backscatter device according to an embodiment of this application;

FIG. 8 is a schematic diagram of an application scenario of a wireless communication device according to an embodiment of this application;

FIG. 9 is a flowchart of a wireless communication method according to an embodiment of this application;

FIG. 10 is a schematic diagram of a wireless communication system according to an embodiment of this application;

FIG. 11 is a timing diagram of wireless communication according to an embodiment of this application;

FIG. 12 is a schematic diagram of a wireless communication system according to an embodiment of this application;

FIG. 13 is a timing diagram of wireless communication according to an embodiment of this application; and

FIG. 14 is a schematic diagram of negotiation in a wireless communication system according to an embodiment of this application.

Reference numeral:

1. processor; 2. transceiver; 3. backscatter device; 4. antenna; 5. memory.

**DESCRIPTION OF EMBODIMENTS**

Embodiments of this application provide a wireless communication device, method, and system. The wireless communication device provided in embodiments of this application includes a backscatter device 3 and an antenna 4. The backscatter device 3 may amplify a signal received through the antenna 4, and reflect an amplified signal outwards through the antenna 4.

To better understand the technical solutions provided in embodiments of this application, the following describes a working principle of the backscatter device 3.

A backscatter principle is described first.

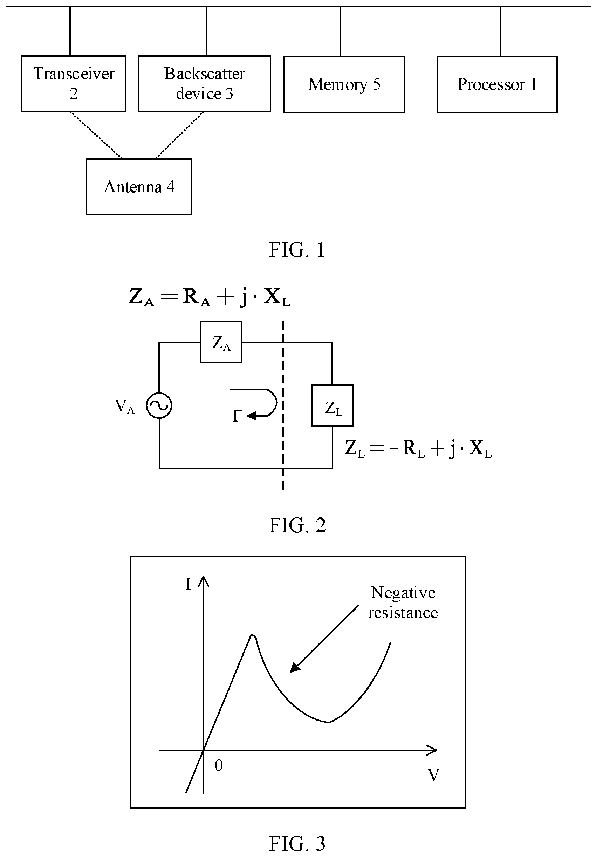

Backscatter (backscatter, BS) in wireless communication is a communication technology in which a radio signal received through an antenna is reversely reflected to wireless space in a specific manner. As shown in FIG. 2, after a radio signal is received through an antenna, a reflective surface is formed between the antenna and a receiving load circuit due to impedance discontinuity between the antenna and the receiving load circuit. A reflection coefficient $\Gamma$ on the reflective surface is usually far less than 1, that is, only a small part of the received radio signal is reflected to the wireless space, forming backscatter.

It is assumed that the impedance of the antenna is $Z_A$, load impedance of the receiving circuit is $Z_L$, and conjugate of $Z_A$ is $Z_A^*$. In this case, the reflection coefficient $\Gamma$ on the reflective surface is:

$$\Gamma = \left| \frac{Z_L - Z_A^*}{Z_L + Z_A} \right|^2$$

If the real part of the load circuit impedance can form negative resistance in a specific circuit design, as $-R_L$ shown in the figure, $\Gamma$ becomes:

$$\Gamma = \left| \frac{Z_L - Z_A^*}{Z_L + Z_A} \right|^2 = \frac{(R_L + R_A)^2 + (X_L + X_A)^2}{(R_L - R_A)^2 + (X_L + X_A)^2} > 1$$

In this case, a value of $\Gamma$ is greater than 1, that is, strength of a reflected signal is greater than strength of an incident received signal, implementing amplification of a backscattered signal.

For example, two possible implementation forms of the backscatter device 3 are provided.

(1) A tunnel diode-based discrete device circuit as the backscatter device 3.

FIG. 3 is a schematic diagram of a change of a current of a tunnel diode with a voltage. In a specific voltage region, a current flowing through the tunnel diode decreases as a power supply voltage increases. This reflects the negative resistance characteristic.

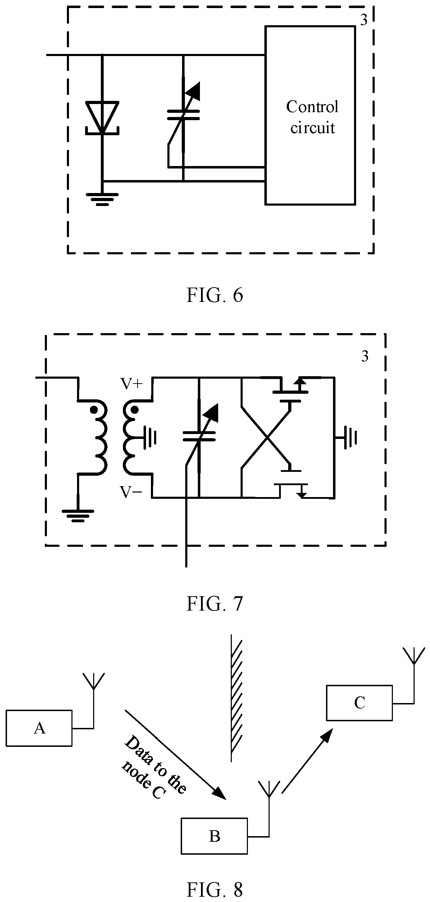

Therefore, as shown in FIG. 6, the backscatter device 3 provided in this embodiment of this application may be implemented based on this characteristic of the tunnel diode.

(2) As shown in FIG. 7, the backscatter device 3 provided in this embodiment of this application may alternatively be implemented based on a CMOS circuit.

An embodiment of this application provides a wireless communication device. As shown in FIG. 1, the wireless communication device includes a processor 1, a transceiver 2, a backscatter device 3, and an antenna 4. The processor 1 is configured to: in a transceiving period, control the transceiver 2 to work and the backscatter device 3 to stop working; and in a non-transceiving period, control the transceiver 2 to stop working and the backscatter device 3 to work. The transceiver 2 is configured to send and receive, in a working state, a signal through the antenna 4. The backscatter device 3 is configured to: amplify, in a working state, the signal received through the antenna 4; and reflect an amplified signal outwards through the antenna 4.

The wireless communication device provided in embodiments of this application may be, but not limited to, a communication server, a router, a switch, a bridge, a computer, a mobile phone, a watch, a headset, a television, a smart appliance, or the like.

The processor 1 is a control center of the wireless communication device, and may control working states of the transceiver 2 and the backscatter device 3, parse and process a received signal, and the like. The processor 1 may be further configured to control a working frequency of the wireless communication device, a multiple for reflecting and amplifying a received signal by the backscatter device 3, a working mode of the wireless communication device, and the like.

The transceiver 2 may include a receiver and a transmitter, and is configured to receive and send a signal through the antenna 4. The transceiver 2 may be the same as a transceiver in a related technology, and the transceiver 2 may also be referred to as a communication transceiver.

The backscatter device 3 is configured to: amplify a signal received through the antenna 4, and reflect an amplified signal outwards through the antenna 4. A specific implementation form of the backscatter device 3 is not limited in this application. In a possible implementation, as shown in FIG. 6, the backscatter device 3 may be implemented by using a tunnel diode. In another possible implementation, the backscatter device 3 may alternatively be implemented by using a CMOS circuit.

In addition, the wireless communication device may further include a memory 5. The memory 5 may be configured to store some data that needs to be stored, such as a signaling signal.

A transceiving period refers to a period in which the wireless communication device needs to normally participate in wireless communication. In such a period, the wireless communication device is a receiving node or a sending node of a signal. The non-transceiving period refers to a period in which the wireless communication device does not participate in wireless communication, or participates in wireless communication only as a relay node. This embodiment of this application imposes no limitation on determining of a transceiving period and a non-transceiving period of the wireless communication device. For example, when the wireless communication device is an earbud, a transceiving period and a non-transceiving period may be configured by a user terminal when the earbud is connected to the user terminal. Transceiving periods and non-transceiving periods of two earbuds correspond to each other, that is, when one earbud is in a transceiving period, the other earbud is in a non-transceiving period.

For ease of description, a mode in which the transceiver of the wireless communication device works and the backscatter device does not work may be referred to as a transceiving mode or a normal working mode of the wireless communication device. A mode in which the transceiver of the wireless communication device does not work and the backscatter device of the wireless communication device works may be referred to as a backscatter mode of the wireless communication device. In a transceiving period, the wireless communication device works in the transceiving mode (or the normal working mode), and in a non-transceiving period, the wireless communication device may work in the backscatter mode.

The wireless communication device provided in this embodiment of this application may additionally provide a radio signal relay and amplification service besides completing normal wireless communication.

The wireless communication device includes the backscatter device. The wireless communication device may amplify a signal received through the antenna 4 by using the backscatter device 3, and reflect an amplified signal outwards through the antenna 4. Therefore, in a wireless communication system using the wireless communication device provided in this embodiment of this application, when the wireless communication device is in a non-transceiving period, the wireless communication device may enable the backscatter mode, to provide a radio signal relay and amplification service. In addition, when the wireless communication device is in the backscatter mode, the wireless communication device does not parse and process a received signal, but directly amplifies the signal and then reflects the signal outwards. Therefore, a signal transmission delay is small.

In addition, because the backscatter device 3 directly amplifies and reflects a radio frequency signal, the wireless communication device provided in this embodiment of this application may be used in all wireless communication systems, and may relay and amplify a radio signal of any protocol.

In addition, an incident signal of a wireless communication device serving as a relay node is generally weak, and energy needed for amplifying a weak signal many times is also low. For example, if incident signal strength of the wireless communication device is -50 dBm, even if the signal is amplified by 40 dB, that is, 10,000 times, power consumption needed is only 200-300 uW. Moreover, the power consumption of the backscatter device 3 is lower and at a level of uW when there is no incident signal. In addition, to prevent the wireless communication device from amplifying another unnecessary signal, reverse amplification may also be disabled when it is not needed, to save energy to a greater extent.

FIG. 1 is a schematic diagram of a wireless communication device according to an embodiment of this application. In FIG. 1, the antenna 4 is connected to the transceiver 2 and the backscatter device 3 by using dashed lines. A dashed line indicates that the antenna 4 may or may not be connected to the transceiver 2 and the backscatter device 3. Specifically, connection or not is determined according to a working mode of the wireless communication device and a mode switching manner of the wireless communication device.

An implementation in which the processor 1 controls the working states of the transceiver 2 and the backscatter device 3 is not limited in this application. Two possible implementations are provided below.

In a possible implementation, the antenna 4 is connected to the transceiver 2 and the backscatter device 3. The processor 1 is configured to: in a transceiving period, enable the transceiver 2 and disable the backscatter device 3, and in a non-transceiving period, disable the backscatter device 3 and enable the transceiver 2.

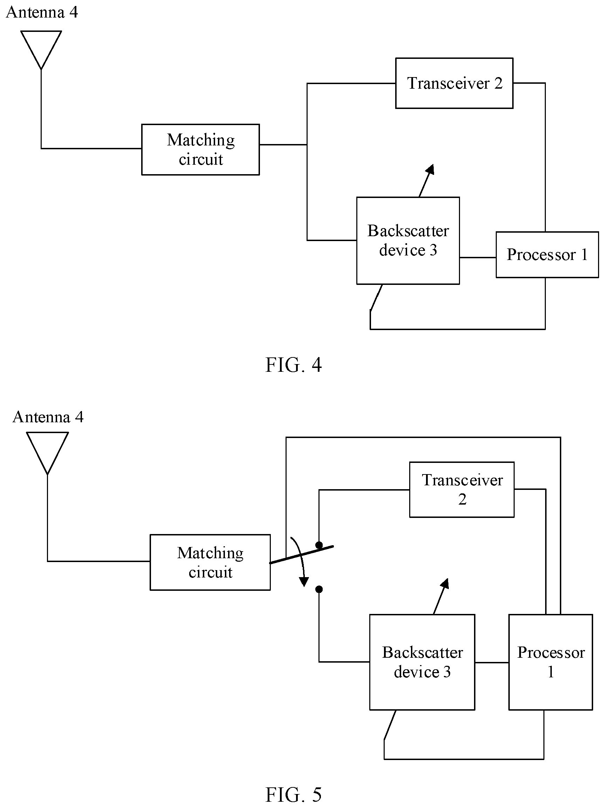

In the solution shown in this embodiment of this application, as shown in FIG. 4, the antenna 4 is connected to the transceiver 2, and is connected to the backscatter device 3. When the wireless communication device is in the transceiving mode, the transceiver 2 is in an enabled state, and the backscatter device 3 is in a disabled state. The wireless communication device may normally receive, process, and send a signal. For example, when the wireless communication device is a right earbud, the wireless communication device may normally receive right-ear audio data sent by a mobile phone.

When the wireless communication device is in the backscatter mode, the transceiver 2 is in a disabled state, and the backscatter device 3 is in an enabled state. The wireless communication device serves as a relay node and provides a relay and amplification service. For example, when the wireless communication device is a right earbud, the wireless communication device may amplify a signal that is sent by a mobile phone and that carries left-ear audio data, and reflect an amplified signal outwards, so that the left earbud receives the signal reflected outwards by the wireless communication device.

In addition, a matching circuit may be disposed between the antenna 4, and the transceiver 2 and the backscatter device 3, so that a received signal is more adaptable to the transceiver 2 and the backscatter device 3.

In a possible implementation, the processor 1 is configured to: in a transceiving period, control the transceiver 2 to be connected to the antenna 4 and the backscatter device 3 to be disconnected from the antenna 4, and in a non-transceiving period, control the backscatter device 3 to be connected to the antenna 4 and the transceiver 2 to be disconnected from the antenna 4.

The antenna 4 is not simultaneously connected to the transceiver 2 and the backscatter device 3.

In the solution shown in this embodiment of this application, as shown in FIG. 5, a controllable switch is disposed between the antenna 4, and the transceiver 2 and the backscatter device 3. The controllable switch may be connected to the processor 1, so that the processor 1 can control the controllable switch. When the processor 1 controls the controllable switch to connect the antenna 4 to the transceiver 2, the transceiver 2 works. The wireless communication device may normally receive, process, and send a signal. For example, when the wireless communication device is a right earbud, the wireless communication device may normally receive right-ear audio data sent by a mobile phone. When the processor 1 controls the controllable switch to connect the antenna 4 to the backscatter device 3, the backscatter device 3 works. The wireless communication device serves as a relay node and provides a relay and amplification service. For example, when the wireless communication device is a right earbud, the wireless communication device may amplify a signal that is sent by a mobile phone and that carries left-ear audio data, and reflect an amplified signal outwards, so that the left earbud receives the signal reflected outwards by the wireless communication device.

In addition, a matching circuit may be disposed between the antenna 4, and the transceiver 2 and the backscatter device 3, so that a received signal is more adaptable to the transceiver 2 and the backscatter device 3.

As shown in FIG. 5 to FIG. 7, the device is a normal wireless communication device when the controllable switch after the matching circuit switches to the transceiver side. When the controllable switch switches to the other side, the wireless communication device becomes a wireless repeater with a function of radio signal reverse amplification.

In a possible implementation, the processor 1 is configured to: in response to a mode switching message received in a transceiving period, control the transceiver 2 to work and the backscatter device 3 to stop working in a transceiving period, and control the transceiver 2 to stop working and the backscatter device 3 to work in a non-transceiving period. In the solution shown in this embodiment of this application, a state in which the wireless communication device switches to the transceiving mode in a transceiving period, and switches to the backscatter mode in a non-transceiving period may be referred to as a mode switching state. In the mode switching state, the wireless communication device automatically switches between the transceiving mode and the backscatter mode based on a period in which the wireless communication device is.

The mode switching state may be a default state, or may be entered under control of another wireless communication device. For example, the wireless communication system includes a first wireless communication device, a second wireless communication device, and a third wireless communication device. The second wireless communication device is the wireless communication device provided in this embodiment of this application. When the first wireless communication device finds, through detection, that quality of communication with the third wireless communication device is low or fails to find the third wireless communication device through detection, or the first wireless communication device has a low battery level, the first wireless communication device may send a mode switching message to the second wireless communication device, so that the second wireless communication device enters the mode switching state.

In a possible implementation, the processor 1 is further configured to control the backscatter device 3 to stop working in both a transceiving period and a non-transceiving period in response to a mode switching disable message received in a transceiving period.

In the solution shown in this embodiment of this application, when the backscatter amplification function of the wireless communication device is not needed, the backscatter device may be controlled to stop working in both a transceiving period and a non-transceiving period. In this way, the power consumption of the wireless communication device can be reduced.

For example, the wireless communication system includes a first wireless communication device, a second wireless communication device, and a third wireless communication device. The second wireless communication device is the wireless communication device provided in this embodiment of this application. When the first wireless communication device finds, through detection, that quality of direct communication with the third wireless communication device is higher than a second target quality threshold, even if the second wireless communication device does not switch to the backscatter mode, the first wireless communication device and the third wireless communication device can complete communication well. When the second wireless communication device enters a transceiving period, the first wireless communication device (or the third wireless communication device) sends a mode switching disable message to the second wireless communication device. The second wireless communication device receives the mode switching disable message and controls the backscatter device to stop working in both a transceiving period and a non-transceiving period. This reduces the power consumption of the second wireless communication device.

In a possible implementation, the processor is 1 further configured to control, based on a backscatter gain adjustment message received in a transceiving period, a multiple for reflecting and amplifying a received signal by the backscatter device 3. In a possible implementation, when the backscatter device 3 is implemented by using a tunnel diode, the multiple for reflecting and amplifying may be adjusted by controlling a resonant capacitor of the tunnel diode.

In the solution shown in this embodiment of this application, a multiple for reflecting and amplifying a received signal may be further adjusted when the wireless communication device is in the backscatter mode. In this way, a relay and amplification function of the wireless communication device is better utilized.

For example, the wireless communication system includes a first wireless communication device, a second wireless communication device, and a third wireless communication device. The second wireless communication device is the wireless communication device provided in this embodiment of this application. In this case, the first wireless communication device may generate the backscatter gain adjustment message based on the quality of communication with the third wireless communication device. When the second wireless communication device enters a transceiving period, a backscatter gain adjustment message is sent to the second wireless communication device, and the second wireless communication device adjusts, based on the backscatter gain adjustment message, a multiple for reflecting and amplifying a received signal by the backscatter device.

In a possible implementation, the processor 1 is further configured to control a working frequency of the wireless communication device based on a frequency indication message received in a transceiving period. In a possible implementation, when the backscatter device 3 is implemented by using a tunnel diode, the backscatter device 3 may be implemented by controlling a bias voltage of the tunnel diode.

In the solution shown in this embodiment of this application, the wireless communication device needs to work at a working frequency in an operation process. Working frequencies of wireless communication devices participating in wireless communication at a same moment need to be consistent, and working frequencies of the wireless communication devices need to be changed in different working periods. Therefore, the processor 1 further needs to control a working frequency of the wireless communication device.

For example, the wireless communication system includes a first wireless communication device, a second wireless communication device, and a third wireless communication device. The second wireless communication device is the wireless communication device provided in this embodiment of this application. The first wireless communication device is a primary control device in the communication system. In this case, the first wireless communication device may determine a working frequency of each wireless communication device, and send a frequency indication message to the second wireless communication device, so that the second wireless communication device may work at a target frequency based on the frequency indication message. In another possible implementation, the wireless communication device provided in this embodiment of this application is a primary control device in a system, and the wireless communication device controls a frequency.

In a possible implementation, the processor 1 is further configured to control duration of a non-transceiving period and duration of a transceiving period based on a duration indication message received in a transceiving period.

In the solution shown in this embodiment of this application, duration of a transceiving period and duration of a non-transceiving period of the wireless communication device are controlled, to prevent failure to switch to a normal mode and failure to normally receive a signal that are caused because the wireless communication device is in the backscatter mode all the time (duration of a non-transceiving period is excessively long). After the duration of the transceiving period and the duration of the non-transceiving period of the wireless communication device are determined, a working time sequence of the wireless communication device is determined accordingly.

It should be noted that, when the wireless communication device provided in this embodiment of this application is a primary control device in the wireless communication system, the wireless communication device may further control the duration of the transceiving period and the duration of the non-transceiving period by itself without a duration indication message sent by another wireless communication device.

An embodiment of this application provides a wireless communication method. The method is applied to a wireless communication system. The system includes a first wireless communication device, a second wireless communication device, and a third wireless communication device. The first wireless communication device, the second wireless communication device, and the third wireless communication device may be wireless communication devices of a same type, or may be wireless communication devices of different types. For example, the first wireless communication device may be a mobile phone, the second wireless communication device may be an earbud, and the third wireless communication device may be a smart watch. The wireless communication system may include only three wireless communication devices, or may include more than three wireless communication devices. This is not limited in this application.

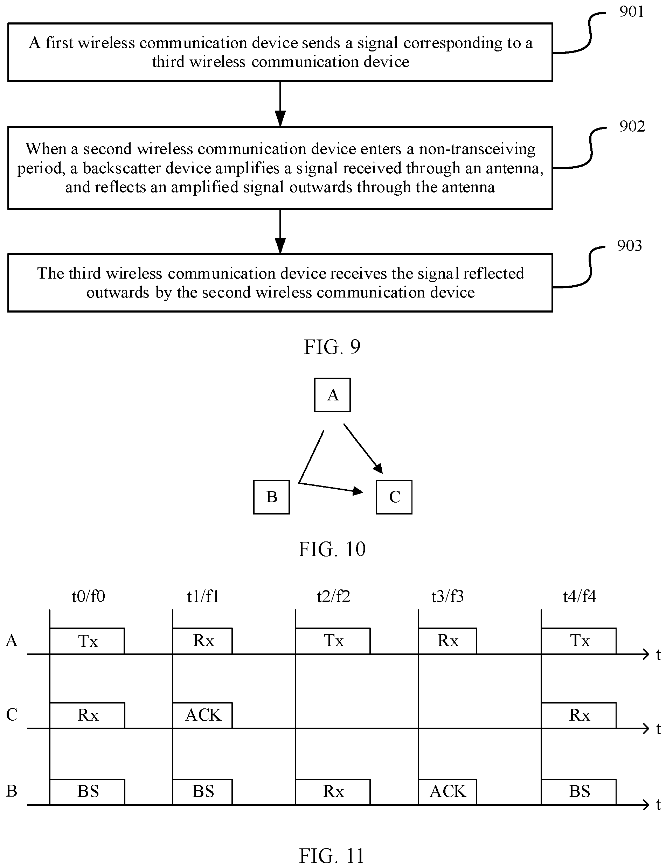

With reference to specific implementations, the following describes in detail a processing procedure of the wireless communication method provided in this embodiment of this application. As shown in FIG. 9, content may be as follows.

In step 901, the first wireless communication device sends a signal corresponding to the third wireless communication device.

The first wireless communication device and the third wireless communication device may be wireless communication devices with the backscatter amplification function provided in embodiments of this application, or may be wireless communication devices without a backscatter amplification function. This is not limited in this application.

The signal corresponding to the third wireless communication device is a signal whose destination device is the third wireless communication device.

For example, the first wireless communication device is a mobile phone, the second wireless communication device is a right earbud, and the third wireless communication device is a left earbud. The signal corresponding to the third wireless communication device is a signal that carries left-ear audio data.

In step 902, when the second wireless communication device enters a non-transceiving period, a backscatter device amplifies a signal received through an antenna, and reflects an amplified signal outwards through the antenna.

The second wireless communication device may be a wireless communication device with the backscatter amplification function provided in embodiments of this application.

In the solution shown in this embodiment of this application, the first wireless communication device sends the signal corresponding to the third wireless communication device, and the second wireless communication device enters a non-transceiving period in this case (the first wireless communication device communicates with the second wireless communication device in this case). The second wireless communication device may switch to a backscatter mode, reflect a signal received through the antenna by using the backscatter device, and reflect an amplified signal outwards through the antenna, to assist in communication between the first wireless communication device and the third wireless communication device.

A prerequisite for that when the second wireless communication device enters a non-transceiving period, the backscatter device amplifies a signal received through the antenna, and reflects an amplified signal outwards through the antenna (that is, the second wireless communication device works in the backscatter mode) is that the second wireless communication device enters a mode switching state. When the second wireless communication device enters the mode switching state, the second wireless communication device enters the transceiving mode in a transceiving period, and enters the backscatter mode in a non-transceiving period. The mode switching state of the second wireless communication device may be a default state, or may be entered under control of another wireless communication device in the wireless communication system.

The following describes control of the mode switching state of the second wireless communication device.

In a possible implementation, when a target condition is met, the first wireless communication device sends a mode switching message corresponding to the second wireless communication device. When the second wireless communication device enters a transceiving period, a transceiver receives the mode switching message through the antenna. In response to the mode switching message, a processor controls the transceiver to work and the backscatter device to stop working in a transceiving period, and controls the transceiver to stop working and the backscatter device to work in a non-transceiving period.

That is, when receiving the mode switching message sent by the first wireless communication device, the second wireless communication device enters the mode switching state.

The following provides several possible target conditions:

① A battery level of the first wireless communication device is lower than a target battery level threshold.

In the solution shown in this embodiment of this application, when a battery level of the first wireless communication device is lower than a target battery level threshold, signal transmit power of the first wireless communication device may be reduced to prolong usage time of the first wireless communication device. The second wireless communication device may be controlled to enter the mode switching state to compensate for communication quality deterioration caused by reduction of signal transmit power, so that the second wireless communication device enters the backscatter mode in a non-transceiving period, to assist in communication between the first wireless communication device and the third wireless communication device.

After successfully entering the mode switching state, the second wireless communication device sends a switching success message corresponding to the first wireless communication device. The first wireless communication device receives the switching success message, to reduce the signal transmit power.

It should be noted that, when the battery level of the third wireless communication device is lower than the target threshold, the first wireless communication device (or the third wireless communication device) may control the second wireless communication device to enable the mode switching state. Correspondingly, after receiving the switching success message, the third wireless communication device may also reduce signal transmit power.

② The first wireless communication device finds, through detection, that quality of communication with the third wireless communication device is lower than a target quality threshold.

In the solution shown in this embodiment of this application, when finding, through detection, that the quality of communication with the third wireless communication device is lower than the target quality threshold, the first wireless communication device may control the second wireless communication device to enter the mode switching mode, so that the second wireless communication device assists in communication between the third wireless communication device and the first wireless communication device. This improves communication quality.

③ The first wireless communication device fails to find the third wireless communication device through detection.

In the solution shown in this embodiment of this application, that the first wireless communication device fails to find the third wireless communication device through detection may result from low energy of a signal transmitted to the third wireless communication device that is caused by a far distance between the third wireless communication device and the second wireless communication device or blocking of the third wireless communication device. In this case, the second wireless communication device may be controlled to enter the mode switching state, so that the second wireless communication device provides a relay and amplification service in a non-transceiving period. This expands radio signal coverage of the communication system. Therefore, the third wireless communication device that fails to be found before can be found through detection.

In addition, the first wireless communication device or the third wireless communication device may further control a backscatter gain of the second wireless communication device, that is, control a multiple for amplifying a received signal by the backscatter device of the second wireless communication device.

The following describes a process of controlling the backscatter gain of the second wireless communication device by using an example in which the first wireless communication device performs control.

The first wireless communication device sends a backscatter gain adjustment message corresponding to the second wireless communication device. When the second wireless communication device enters a transceiving period, the transceiver receives the backscatter gain adjustment message through the antenna, and the second wireless communication device controls the multiple for amplifying a received signal by the backscatter device. In a possible implementation, the backscatter gain adjustment message is generated by the first wireless communication device based on the quality of communication with the third wireless communication device.

For example, when the first wireless communication device finds, through detection, that the quality of communication with the third wireless communication device deteriorates, a larger backscatter gain is determined, so that the multiple for reflecting and amplifying of the second wireless communication device is increased, and the backscatter amplification function of the second wireless communication device is better utilized. When the first wireless communication device finds, through detection, that the quality of communication with the third wireless communication device becomes better, a smaller backscatter gain is determined, so that the multiple for reflecting and amplifying by the second wireless communication device is reduced.

In addition, the first wireless communication device or the third wireless communication device may further control the second wireless communication device to disable the mode switching state. After the mode switching state is disabled, the second wireless communication device is similar to a wireless communication device without a backscatter amplification function in a related technology, and power consumption of the second wireless communication device is reduced after the mode switching state is disabled.

The following describes a process of disabling the mode switching state of the second wireless communication device by using an example in which the first wireless communication device performs control.

The first wireless communication device sends a mode switching disable message corresponding to the second wireless communication device. When the second wireless communication device enters a transceiving period, the transceiver receives the mode switching disable message through the antenna, and the processor controls the backscatter device to stop working in both a transceiving period and a non-transceiving period in response to the mode switching disable message.

A mechanism for triggering the first wireless communication device to send the mode switching disable message is not limited in this application. In a possible implementation, the first wireless communication device sends the mode switching disable message when finding, through detection, that quality of direct communication with the third wireless communication device is higher than a second target quality threshold. That is, when the quality of direct communication between the first wireless communication device and the third wireless communication device is good, a relay and amplification service of the second wireless communication device may not be needed.

In addition, the wireless communication device needs to work at a working frequency in an operation process. Working frequencies of wireless communication devices participating in wireless communication at a same moment need to be consistent, and working frequencies of the wireless communication devices need to be changed in different working periods. Therefore, the processor further needs to control a working frequency of the wireless communication device. In a possible implementation, the first wireless communication device sends a frequency indication message corresponding to the second wireless communication device. When the second wireless communication device enters a transceiving period, the transceiver receives the frequency indication message through the antenna, and the processor controls a working frequency of the second wireless communication device based on the frequency indication message. For example, the first wireless communication device is a primary control device in the wireless communication system. In this case, the first wireless communication device may determine a working frequency of each wireless communication device, and send a frequency indication message to the second wireless communication device, so that the second wireless communication device may work at a target frequency based on the frequency indication message.

In another possible implementation, the second wireless communication device is a primary control device in the wireless communication system, and the second wireless communication device controls a working frequency of its own.

In addition, duration of a transceiving period and duration of a non-transceiving period of the wireless communication device may be further controlled. In a possible implementation, the first wireless communication device sends a duration indication message corresponding to the second wireless communication device. When the second wireless communication device enters a transceiving period, the transceiver receives the duration indication message through the antenna, and the processor controls duration of a non-transceiving period and duration of a transceiving period in response to the duration indication message.

For example, the first wireless communication device is a primary control device in the wireless communication system. In this case, the first wireless communication device may determine duration of a transceiving period and duration of a non-transceiving period of the second wireless communication device, and send the duration indication message to the second wireless communication device, so that the second wireless communication device may determine the duration of the transceiving period and the duration of the non-transceiving period based on the duration indication message.

The duration indication message may be sent by the first wireless communication device when a link is established between the first wireless communication device and the second wireless communication device. Alternatively, the duration indication message may be sent to the second wireless communication device together with the mode switching message.

In another possible implementation, if the second wireless communication device is a primary control device in the wireless communication system, the second wireless communication device may further control duration of a transceiving period and duration of a non-transceiving period by itself without a duration indication message sent by another wireless communication device.

In step 903, the third wireless communication device receives the signal reflected outwards by the second wireless communication device.

In the solution shown in this embodiment of this application, the third wireless communication device receives the signal reflected outwards by the second wireless communication device, and then can normally perform parsing and processing.

In a possible implementation, after receiving the signal reflected outwards by the second wireless communication device, the third wireless communication device may further send a reception acknowledgement signal to the first wireless communication device, to indicate that the signal is successfully received. The second wireless communication device may also enable the backscatter mode to improve signal strength of the reception acknowledgement signal.

That is, the third wireless communication device sends the reception acknowledgement signal corresponding to the first wireless communication device. When the second wireless communication device enters a non-transceiving period, the backscatter device amplifies the reception acknowledgement signal received through the antenna, and reflects an amplified reception acknowledgement signal outwards through the antenna. The first wireless communication device receives the reception acknowledgement signal reflected outwards by the second wireless communication device.

It should be additionally noted that, if the third wireless communication device also has a backscatter amplification function, the third wireless communication device may switch to the backscatter mode when the first wireless communication device communicates with the second wireless communication device.

If the first wireless communication device also has a backscatter amplification function, the first wireless communication device may also switch to the backscatter mode when the second wireless communication device communicates with the third wireless communication device.

When the wireless communication system includes a plurality of wireless communication devices with a backscatter function, the plurality of wireless communication devices may perform backscatter-based mutual assistance communication, that is, mutual assistance communication.

For example, the wireless communication method provided in this embodiment of this application is described by using an example in which a node A, a node B, and a node C are respectively a first wireless communication device, a second wireless communication device, and a third wireless communication device. The node A may be a user terminal, the node B and the node C may be, but are not limited to, two earbuds connected to the node A.

(1) As shown in FIG. 10, the node B is a wireless communication device with a backscatter amplification function. The node A and the node C may have a backscatter amplification function, or may have no backscatter amplification function. This is not limited in this application.

With reference made to FIG. 11, a communication time sequence between the node A, the node B, and the node C, and a state of each wireless communication device during communication are described. Tx represents signal sending, Rx represents signal receiving, B S represents the backscatter mode, and ACK represents a reception acknowledgement signal.

In a t0 slot (a non-transceiving period of the node B), the node B works in the backscatter (BS) mode, and the node C may receive both a signal from the node A and a reflected signal that is of the signal from the node A and that is from the node B (refer to FIG. 10). The reflected signal is equivalent to a multi-path signal sent by the node A. All the three nodes in the entire system work at a frequency f0.

In a t1 slot (a non-transceiving period of the node B), the node C needs to reply to the node A with an ACK signal, and the node B is also configured to be in the BS mode. The node A may receive both a signal from the node C and a reflected signal that is of the signal from node A and that is from the node B. The reflected signal is equivalent to a multi-path signal sent by the node C. All the three nodes in the entire system work at a frequency f1.

Slots t2 and t3 (transceiving periods of the node B) are normal working slots of the node B. In this case, the node B switches to a normal working mode (that is, the transceiving mode). In the slots t2 and t3, only the node A and the node B participate in communication.

In the t2 slot (a transceiving period of the node B), the node A sends a signal corresponding to the node B, the node B normally receives the signal sent by the node A, and the node A and the node B work at a frequency f2.

In the t3 slot (a transceiving period of the node B), the node B needs to reply to the node A with an ACK signal, the node A normally receives the ACK signal sent by the node B, and the node A and the node B work at a frequency f3. The preceding time sequence is repeated for slots after t4.

The technical solution provided in this embodiment of this application may have at least the following beneficial effects.

Radio signal coverage is expanded. The wireless communication device provided in this embodiment of this application may switch to the backscatter mode when the wireless communication device does not need to work (in a non-transceiving period), and serve as a relay node to provide a relay and amplification service. With the help of relay and amplification, an original node in the system can discover a new node that cannot directly communicate with the original node before. This expands radio signal coverage.

Received signal quality of a node is improved. For example, the node B provides a relay and amplification service for the node C and the node A, and received signal quality of the node C and the node A is enhanced. It should be noted that, because a signal reflected by the node B is amplified, when a signal received by the node B is weaker than signals received by the node A and the node C, the received weak signal may also be amplified via backscatter amplification, so that strength of the reflected signal is greater than strength of a signal that is sent by a sending node and that is directly received by a receiving node.

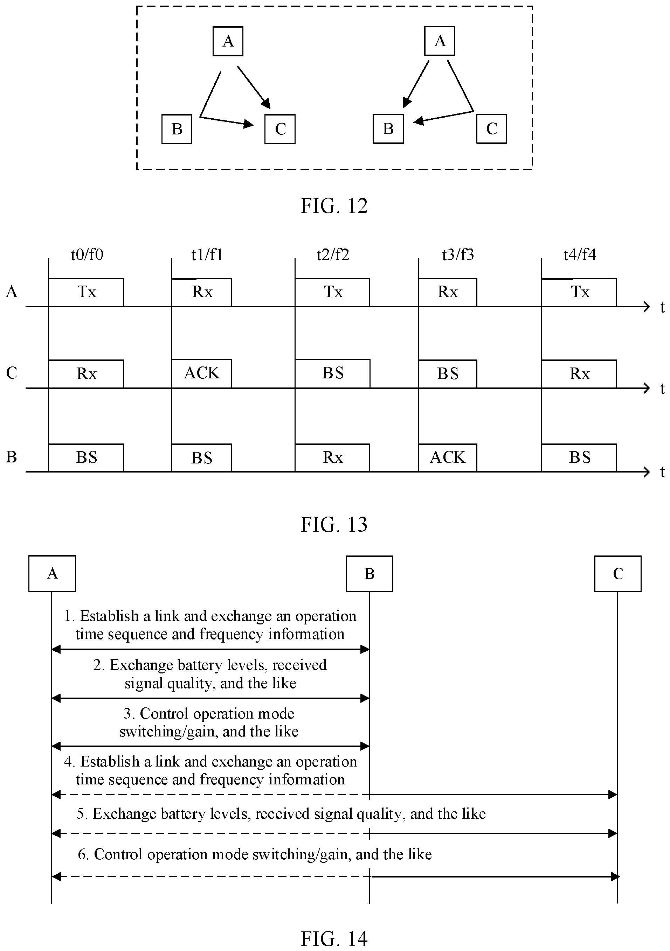

Data rate of a communication link is increased. In the backscatter mode, the wireless communication device does not need to parse a received signal, but directly amplifies and reflects the received signal. Therefore, compared with a technical solution of a related technology in which a relay node sends a received signal to a destination node after parsing the signal, the technical solution provided in this embodiment of this application can improve a data rate of a communication link and a data transmission speed. (2) As shown in FIG. 12, the node B and the node C are wireless communication devices with the backscatter amplification function, and the node A may have the backscatter amplification function, or may not have the backscatter amplification function. This is not limited in this application.

With reference made to FIG. 13, a communication time sequence between the node A, the node B, and the node C, and a state of each wireless communication device during communication are described. Tx represents signal sending, Rx represents signal receiving, BS represents the backscatter mode, and ACK represents a reception acknowledgement signal.

In a t0 slot (a non-transceiving period of the node B and a transceiving period of the node C), the node B works in the BS mode, and the node C may receive both a signal from the node A and a reflected signal that is of the signal from node A and that is from the node B. The reflected signal is equivalent to a multi-path signal sent by the node A. All the three nodes in the entire system work at a frequency f0.

In a t1 slot (a non-transceiving period of the node B and a transceiving period of the node C), the node C needs to reply to the node A with an ACK signal, and the node B is configured to be in the BS mode. The node A may receive both a signal from the node C and a signal that is of the signal from node A and that is from the node B. The reflected signal is equivalent to a multi-path signal sent by the node C. All the three nodes in the entire system work at a frequency f1.

In a t2 slot (a transceiving period of the node B and a non-transceiving period of the node C), the node B switches to the normal working mode (that is, the transceiving mode), and the node C switches to the BS mode to provide a relay and amplification service for the node B. The node B may receive both a signal from the node A and a reflected signal that is of the signal from node A and that is from the node C. The reflected signal of the node C is equivalent to a multi-path signal sent by the node A. All the three nodes in the entire system work at a frequency f2.

In a t3 slot (a transceiving period of the node B and a non-transceiving period of the node C), the node B needs to reply to the node A with an ACK signal, and the node C is configured to be in the BS mode. The node A may receive both a signal from the node B and a reflected signal that is of the signal from the node A and that is from the node C. The reflected signal is equivalent to a multi-path signal sent by the node B. All the three nodes in the entire system work at a frequency f4.

The preceding time sequence is repeated for slots after t4.

In addition to the beneficial effects of the foregoing example (1), the solution shown in this embodiment of this application further has at least the following beneficial effects.

A success rate of radio signal transmission is improved. When received signals of both the node B and the node C are weak and data demodulation of the two nodes are error-prone, a mutual assistance communication mode may be enabled. That is, when the node B works normally, the node C assists in relaying and amplifying a signal received by the node B; and when the node C works normally, the node B assists in relaying and amplifying a signal received by the node C. In the mutual assistance communication mode, received signals of both the node B and the node C are stronger than before. This improves a success rate of radio signal transmission.

This helps save battery power of the node A. After the mutual assistance communication mode is enabled between the node B and the node C, the node A may reduce signal transmit power, to save battery power when the node A has a low battery level.

(3) A technical solution for exchanging information between wireless communication devices in a wireless communication system is provided. As shown in FIG. 14, the three communication nodes complete information exchange and mutual assistance communication under unified control of the node A. Procedures included are as follows.

① A communication link is established between the node A and the node B for negotiation of a working time sequence, frequency information, and the like for sending and receiving between the two nodes. In addition, the node A and the node B may exchange respective backscatter amplification capabilities between each other.

② The node A and the node B exchange information such as battery level information and received radio signal quality of each other. The radio signal quality may include received signal strength, for example, a received signal strength indication (received signal strength indication, RSSI) and a signal demodulation effect, for example, a bit error rate (bit error rate, BER) or a packet error rate (packet error rate, PER).

③ The node A controls, based on a capability of the node B and a specific switching criterion, working mode switching of the node B and parameters such as a backscatter gain (that is, a multiple for reflecting and amplifying a received signal) of the node B in the backscatter mode.

④ A communication link is established between the node A and the node C for negotiation of a working time sequence, a frequency, and capability information between the two nodes. It should be noted that a dashed line between the node A and the node B in step in the flowchart shown in FIG. 14 indicates that a relay and amplification service of the node B may help establish a communication link between the node A and the node C.

⑤ The node A and the node C exchange respective information such as battery level information and received radio signal quality with each other. A relay and amplification service of the node B may also be help perform this process.

⑥ The node A controls, based on a capability of the node C and a specific switching criterion, working mode switching of the node C and parameters such as a multiple for amplifying a received signal by the node C in the backscatter mode. Under unified control of the node A, backscatter-based mutual assistance communication may be further implemented between the node B and the node C.

It should be noted that the foregoing procedure is divided into six steps without strict sequence. Each step is not limited to one message exchange between two nodes, and information exchange in a corresponding step may be completed through exchanges for a plurality of times.

In addition, common switching rules for the node A to control working mode switching of the node B or the node C include but are not limited to the following rules.

The node A learns of existence of the node B and the node C in advance, and implements the backscatter-based mutual assistance communication through working mode switching.

The node A does not learn of existence of the node B or the node C in advance, and controls the node B or the node C to enable the backscatter mode, to expand radio signal coverage and find the node B or the node C.

When signal reception or demodulation of the node A, the node B, or the node C is poor, the node B or the node C is controlled to enable the backscatter mode in a unified manner.

The node A controls a backscatter gain of the node B or the node C, so that the node B and the node C have similar reception and demodulation performance.

When the node A has a low battery level, or for a purpose of saving battery power or the like, the node B and the node C are controlled to enable the backscatter-based mutual assistance communication, so that signal transmit power of the node A can be reduced.

An embodiment of this application further provides a wireless communication system. The system includes a first wireless communication device, a second wireless communication device, and a third wireless communication device. The second wireless communication device is the wireless communication device provided in this embodiment of this application.

In a possible implementation, the first wireless communication device is configured to send a signal corresponding to the third wireless communication device.

The second wireless communication device is configured to: amplify a signal received through an antenna, and reflect an amplified signal outwards through the antenna.

The third wireless communication device is configured to receive the signal reflected outwards by the second wireless communication device.

In a possible implementation, the third wireless communication device is configured to send a reception acknowledgement signal corresponding to the first wireless communication device.

The second wireless communication device is further configured to amplify the reception acknowledgement signal received through the antenna, and reflect an amplified reception acknowledgement signal outwards through the antenna.

The first wireless communication device is configured to receive the reception acknowledgement signal reflected outwards by the second wireless communication device.

In a possible implementation, the first wireless communication device is configured to: when a target condition is met, send a mode switching message corresponding to the second wireless communication device.

The second wireless communication device is further configured to: in response to the mode switching message, control the transceiver to work and the backscatter device to stop working in a transceiving period, and control the transceiver to stop working and the backscatter device to work in a non-transceiving period.

In a possible implementation, the target condition includes one or more of the following: A battery level of the first wireless communication device is lower than a target battery level threshold, the first wireless communication device finds, through detection, that quality of communication with the third wireless communication device is lower than a target quality threshold, and the first wireless communication device fails to find the third wireless communication device through detection.

In a possible implementation, when the target condition is that a battery level of the first wireless communication device is lower than a target battery level threshold, the second wireless communication device is further configured to send a switching success message corresponding to the first wireless communication device through the antenna. The first wireless communication device is configured to receive the switching success message, to reduce signal transmit power.

In a possible implementation, the first wireless communication device is further configured to send a frequency indication message corresponding to the second wireless communication device.

The second wireless communication device is further configured to control a working frequency based on the frequency indication message.

In a possible implementation, the first wireless communication device is further configured to send a backscatter gain adjustment message corresponding to the second wireless communication device.

The second wireless communication device is further configured to control, based on the backscatter gain adjustment message, a multiple for reflecting and amplifying a received signal.

In a possible implementation, the first wireless communication device is further configured to generate the backscatter gain adjustment message based on the quality of communication with the third wireless communication device.

In a possible implementation, the first wireless communication device is further configured to send a mode switching disable message corresponding to the second wireless communication device.

The second wireless communication device is further configured to control the backscatter device to stop working in both a transceiving period and a non-transceiving period in response to the mode switching disable message.

In a possible implementation, the first wireless communication device is further configured to send the mode switching message when finding, through detection, that quality of direct communication with the third wireless communication device is higher than a second target quality threshold.

In a possible implementation, the first wireless communication device is further configured to send a duration indication message corresponding to the second wireless communication device.

The second wireless communication device is further configured to control duration of a non-transceiving period and duration of a transceiving period based on the duration indication message.

The foregoing descriptions are merely optional embodiments of this application, but are not intended to limit this application. Any modification, equivalent replacement, or improvement made without departing from the principle of this application should fall within the protection scope of this application.

**Claims**

1.  A wireless communication device, wherein the wireless communication device comprises a processor (1), a transceiver (2), a backscatter device (3), and an antenna (4), wherein

    the processor (1) is configured to: in a transceiving period, control the transceiver (2) to work and the backscatter device (3) to stop working, and in a non-transceiving period, control the transceiver (2) to stop working and the backscatter device (3) to work;
    the transceiver (2) is configured to send and receive, in a working state, a signal through the antenna (4); and
    the backscatter device (3) is configured to: amplify, in a working state, a signal received through the antenna (4); and reflect an amplified signal outwards through the antenna (4).

2.  The wireless communication device according to claim 1, wherein the processor (1) is configured to: in a transceiving period, control the transceiver (2) to be connected to the antenna (4) and the backscatter device (3) to be disconnected from the antenna (4), and in a non-transceiving period, control the backscatter device (3) to be connected to the antenna (4) and the transceiver (2) to be disconnected from the antenna (4).

3.  The wireless communication device according to claim 1, wherein the antenna (4) is connected to the transceiver (2) and the backscatter device (3) separately; and

    the processor (1) is configured to: in a transceiving period, control the transceiver (2) to be enabled and the backscatter device (3) to be disabled, and in a non-transceiving period, control the backscatter device (3) to be enabled and the transceiver (2) to be disabled.

4.  The wireless communication device according to any one of claims 1 to 3, wherein the processor (1) is configured to: in response to a mode switching message received in a transceiving period, control the transceiver (2) to work and the backscatter device (3) to stop working in a transceiving period, and control the transceiver (2) to stop working and the backscatter device (3) to work in a non-transceiving period.

5.  The wireless communication device according to any one of claims 1 to 4, wherein the processor (1) is further configured to control the backscatter device (3) to stop working in both a transceiving period and a non-transceiving period in response to a mode switching disable message received in a transceiving period.

6.  The wireless communication device according to any one of claims 1 to 5, wherein the processor (1) is further configured to control, based on a backscatter gain adjustment message received in a transceiving period, a multiple for reflecting and amplifying a received signal by the backscatter device (3).

7.  The wireless communication device according to any one of claims 1 to 6, wherein the processor (1) is further configured to control a working frequency of the wireless communication device based on a frequency indication message received in a transceiving period.

8.  The wireless communication device according to any one of claims 1 to 7, wherein the processor (1) is further configured to control duration of a non-transceiving period and duration of a transceiving period based on a duration indication message received in a transceiving period.

9.  The wireless communication device according to any one of claims 1-8, wherein the wireless communication device further comprises a memory (5).

10. A wireless communication method, wherein the method is applied to a wireless communication system; the system comprises a first wireless communication device, a second wireless communication device, and a third wireless communication device; the second wireless communication device comprises a processor, a transceiver, a backscatter device, and an antenna; and the method comprises:

    sending, by the first wireless communication device, a signal corresponding to the third wireless communication device;

when the second wireless communication device enters a non-transceiving period, amplifying, by the backscatter device, a signal received through the antenna, and reflecting an amplified signal outwards through the antenna; and

receiving, by the third wireless communication device, the signal reflected outwards by the second wireless communication device.

11. The method according to claim 10, wherein after the receiving, by the third wireless communication device, the signal reflected outwards by the second wireless communication device, the method further comprises:

sending, by the third wireless communication device, a reception acknowledgement signal corresponding to the first wireless communication device;

when the second wireless communication device enters a non-transceiving period, amplifying, by the backscatter device, the reception acknowledgement signal received through the antenna, and reflecting an amplified reception acknowledgement signal outwards through the antenna; and

receiving, by the first wireless communication device, the reception acknowledgement signal reflected outwards by the second wireless communication device.

12. The method according to claim 10 or 11, wherein when the second wireless communication device enters a non-transceiving period, before the amplifying, by the backscatter device, a signal received through the antenna, and reflecting the amplified signal outwards through the antenna, the method further comprises:

when a target condition is met, sending, by the first wireless communication device, a mode switching message corresponding to the second wireless communication device; and

when the second wireless communication device enters a transceiving period, receiving, by the transceiver, the mode switching message through the antenna; and in response to the mode switching message, controlling, by the processor, the transceiver to work and the backscatter device to stop working in a transceiving period, and controlling the transceiver to stop working and the backscatter device to work in a non-transceiving period.

13. The method according to claim 12, wherein the target condition comprises one or more of the following: a battery level of the first wireless communication device is lower than a target battery level threshold, the first wireless communication device finds, through detection, that quality of communication with the third wireless communication device is lower than a target quality threshold, and the first wireless communication device fails to find the third wireless communication device through detection.

14. The method according to claim 13, wherein when the target condition is that the battery level of the first wireless communication device is lower than the target battery level threshold, after the controlling, by the processor, the transceiver to work and the backscatter device to stop working in a transceiving period, and controlling the transceiver to stop working and the backscatter device to work in a non-transceiving period, in response to the mode switching message, the method further comprises:

when the second wireless communication device enters a transceiving period, sending, by the transceiver through the antenna, a switching success message corresponding to the first wireless communication device; and

receiving, by the first wireless communication device, the switching success message, to reduce signal transmit power.

15. The method according to any one of claims 10 to 14, wherein the method further comprises:

sending, by the first wireless communication device, a frequency indication message corresponding to the second wireless communication device;

when the second wireless communication device enters a transceiving period, receiving, by the transceiver, the frequency indication message through the antenna; and controlling, by the processor, a working frequency of the second wireless communication device based on the frequency indication message.

16. The method according to any one of claims 10 to 15, wherein the method further comprises:

sending, by the first wireless communication device, a backscatter gain adjustment message corresponding to the second wireless communication device; and

when the second wireless communication device enters a transceiving period, receiving, by the transceiver, the backscatter gain adjustment message through the antenna, and controlling, by the processor based on the backscatter gain adjustment message, a multiple for reflecting and amplifying a received signal by the backscatter device.

17. The method according to claim 16, wherein before the sending, by the first wireless communication device, a backscatter gain adjustment message corresponding to the second wireless communication device, the method further comprises:
generating, by the first wireless communication device, the backscatter gain adjustment message based on the quality of communication with the third wireless communication device.

18. The method according to any one of claims 10 to 17, wherein the method further comprises:

sending, by the first wireless communication device, a mode switching disable message corresponding to the second wireless communication device; and
when the second wireless communication device enters a transceiving period, in response to the mode switching disable message, receiving, by the transceiver, the mode switching disable message through the antenna; and controlling, by the processor, the backscatter device to stop working in both a transceiving period and a non-transceiving period.

19. The method according to claim 18, wherein the sending, by the first wireless communication device, a mode switching disable message corresponding to the second wireless communication device comprises:
sending, by the first wireless communication device, the mode switching message when finding, through detection, that quality of direct communication with the third wireless communication device is higher than a second target quality threshold.

20. The method according to any one of claims 10 to 19, wherein the method further comprises:

sending, by the first wireless communication device, a duration indication message corresponding to the second wireless communication device; and
when the second wireless communication device enters a transceiving period, receiving, by the transceiver, the duration indication message through the antenna; and controlling, by the processor duration of a non-transceiving period and duration of a transceiving period in response to the duration indication message.

21. A wireless communication system, wherein the system comprises a first wireless communication device, a second wireless communication device, and a third wireless communication device; and the second wireless communication device is the wireless communication device according to any one of claims 1 to 8.

22. The system according to claim 21, wherein the first wireless communication device is configured to send a signal corresponding to the third wireless communication device;

the second wireless communication device is configured to: amplify a signal received through an antenna, and reflect an amplified signal outwards through the antenna; and
the third wireless communication device is configured to receive the signal reflected outwards by the second wireless communication device.

23. The system according to claim 22, wherein the third wireless communication device is configured to send a reception acknowledgement signal corresponding to the first wireless communication device;

the second wireless communication device is further configured to: amplify the reception acknowledgement signal received through the antenna, and reflect an amplified reception acknowledgement signal outwards through the antenna; and
the first wireless communication device is further configured to receive the reception acknowledgement signal reflected outwards by the second wireless communication device.

24. The system according to any one of claims 21 to 23, wherein the first wireless communication device is further configured to: when a target condition is met, send a mode switching message corresponding to the second wireless communication device; and

the second wireless communication device is further configured to: in response to the mode switching message, control the transceiver to work and the backscatter device to stop working in a transceiving period, and control the transceiver to stop working and the backscatter device to work in a non-transceiving period.

25. The system according to claim 24, wherein the target condition comprises one or more of the following: a battery level of the first wireless communication device is lower than a target battery level threshold, the first wireless communication device finds, through detection, that quality of communication with the third wireless communication device is lower than a target quality threshold, and the first wireless communication device fails to find the third wireless communication device through detection.

26. The system according to claim 25, wherein when the target condition is that the battery level of the first wireless communication device is lower than the target battery level threshold, the second wireless communication device is further configured to send a switching success message corresponding to the first wireless communication device through the antenna; and
the first wireless communication device is further configured to receive the switching success message, to reduce signal transmit power.

27. The system according to any one of claims 21 to 26, wherein the first wireless communication device is further configured to send a frequency indication message corresponding to the second wireless communication device; and
the second wireless communication device is further configured to control a working frequency based on the frequency indication message.

28. The system according to any one of claims 21 to 27, wherein the first wireless communication device is further configured to send a backscatter gain adjustment message corresponding to the second wireless communication device; and
the second wireless communication device is further configured to control, based on the backscatter gain adjustment message, a multiple for reflecting and amplifying a received signal.

29. The system according to claim 28, wherein the first wireless communication device is further configured to generate the backscatter gain adjustment message based on the quality of communication with the third wireless communication device.

30. The system according to any one of claims 21 to 29, wherein the first wireless communication device is further configured to send a mode switching disable message corresponding to the second wireless communication device; and
the second wireless communication device is further configured to control the backscatter device to stop working in both a transceiving period and a non-transceiving period in response to the mode switching disable message.

31. The system according to claim 30, wherein the first wireless communication device is further configured to send the mode switching message when finding, through detection, that quality of direct communication with the third wireless communication device is higher than a second target quality threshold.

32. The system according to any one of claims 21 to 31, wherein the first wireless communication device is further configured to send a duration indication message corresponding to the second wireless communication device; and
the second wireless communication device is further configured to control duration of a non-transceiving period and duration of a transceiving period based on the duration indication message.

| Transceiver 2 | Backscatter device 3 | Memory 5 | Processor 1 |

Antenna 4

FIG. 1

$$Z_A = R_A + j \cdot X_L$$

$Z_A$

$V_A$

$\Gamma$

$Z_L$

$$Z_L = -R_L + j \cdot X_L$$

FIG. 2

I

Negative resistance

0

V

FIG. 3

Antenna 4

Matching
circuit

Transceiver 2

Backscatter
device 3

Processor 1

FIG. 4

Antenna 4

Matching
circuit

Transceiver
2

Backscatter
device 3

Processor
1

FIG. 5

FIG. 6

FIG. 7

FIG. 8

901

A first wireless communication device sends a signal corresponding to a third wireless communication device

902

When a second wireless communication device enters a non-transceiving period, a backscatter device amplifies a signal received through an antenna, and reflects an amplified signal outwards through the antenna

903

The third wireless communication device receives the signal reflected outwards by the second wireless communication device

FIG. 9

A

B → C

FIG. 10

| | t0/f0 | t1/f1 | t2/f2 | t3/f3 | t4/f4 |
|---|---|---|---|---|---|
| A | Tx | Rx | Tx | Rx | Tx |
| C | Rx | ACK | | | Rx |
| B | BS | BS | Rx | ACK | BS |

FIG. 11

FIG. 12

| | t0/f0 | t1/f1 | t2/f2 | t3/f3 | t4/f4 |
|---|---|---|---|---|---|
| A | Tx | Rx | Tx | Rx | Tx |
| C | Rx | ACK | BS | BS | Rx |
| B | BS | BS | Rx | ACK | BS |

FIG. 13

A        B        C

1. Establish a link and exchange an operation time sequence and frequency information

2. Exchange battery levels, received signal quality, and the like

3. Control operation mode switching/gain, and the like

4. Establish a link and exchange an operation time sequence and frequency information

5. Exchange battery levels, received signal quality, and the like

6. Control operation mode switching/gain, and the like

FIG. 14

## INTERNATIONAL SEARCH REPORT

| | International application No. |
|---|---|
| | **PCT/CN2021/096820** |

| A. | CLASSIFICATION OF SUBJECT MATTER |
|---|---|

H04B 1/02(2006.01)i; H04R 1/00(2006.01)i

According to International Patent Classification (IPC) or to both national classification and IPC

| B. | FIELDS SEARCHED |
|---|---|

Minimum documentation searched (classification system followed by classification symbols)

H04R1;H04R25;H04B1

Documentation searched other than minimum documentation to the extent that such documents are included in the fields searched

Electronic data base consulted during the international search (name of data base and, where practicable, search terms used)

CNABS, CNKI, CNTXT, VEN, USTXT, EPTXT, WOTXT, JPTXT: 耳机, 耳麦, 耳塞, 助听器, 背反射, 反向散射, 反射器, 后向散射, 转发, 中继, 节电, 耗电, earphone, earbud, hearing assistant, backscatter, relay, transponder, energy saving

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109547039 A (XI'AN JIAOTONG UNIVERSITY) 29 March 2019 (2019-03-29) description, paragraphs [0055]-[0058], figure 1 | 10, 11 |
| A | CN 109547039 A (XI'AN JIAOTONG UNIVERSITY) 29 March 2019 (2019-03-29) entire document | 1-9, 12-32 |
| A | CN 101895510 A (SIEMENS MEDICAL INSTR PTE LTD.) 24 November 2010 (2010-11-24) entire document | 1-32 |
| A | US 2012052810 A1 (PLANTRONICS, INC.) 01 March 2012 (2012-03-01) entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 June 2021** | **02 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

| | | | | |
|---|---|---|---|---|
| International application No. | | | | |
| **PCT/CN2021/096820** | | | | |

| Patent document cited in search report | | | Publication date (day/month/year) | Patent family member(s) | | | Publication date (day/month/year) |
|---|---|---|---|---|---|---|---|
| CN | 109547039 | A | 29 March 2019 | CN | 109547039 | B | 27 October 2020 |
| CN | 101895510 | A | 24 November 2010 | EP | 2249584 | B1 | 30 April 2014 |
| | | | | DE | 102009019842 | B3 | 07 October 2010 |
| | | | | US | 2010278367 | A1 | 04 November 2010 |
| | | | | US | 8483417 | B2 | 09 July 2013 |
| | | | | EP | 2249584 | A2 | 10 November 2010 |
| | | | | EP | 2249584 | A3 | 19 December 2012 |
| | | | | CN | 101895510 | B | 31 December 2014 |
| US | 2012052810 | A1 | 01 March 2012 | US | 8498428 | B2 | 30 July 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010575853